# EUROPEAN PATENT APPLICATION

(11) **EP 1 977 638 A2**
(43) Date of publication of application: **08.10.2008**
(21) Application number: 08425157.8
(22) Date of filing: 13.03.2008
(51) Int. Cl.: A01B 39/16

(54) **Apparatus for tilling vineyards and orchards**

(30) Priority: 15.03.2007 IT TO20070195
(71) Applicant: Galfre' Domenico & C. S.R.L., 12038 Savigliano (CN) (IT)
(72) Inventor: Donalisio, Antonio, 12038 Savigliano, (Cuneo) (IT)
(74) Representative: Rondano, Davide

(57) **Abstract**

The tilling apparatus (10), of the type intended to be attached to an agricultural tractor (12) to be driven by it along a working direction coinciding with the driving direction of the tractor (12), comprises a support structure (14, 26), a hoeing device (20) mounted on the support structure (14, 26) to perform an inter-stock hoeing operation, a first working unit (16) mounted on the support structure (14, 26) downstream of the hoeing device (20), with respect to the working direction, to perform a first inter-row tilling operation on the soil, in particular a rotary tilling operation, and a second working unit (18) mounted on the support structure (14, 26) downstream of the first working unit (16), with respect to the working direction, to perform a second inter-row tilling operation on the soil which is different from the first one, in particular a ridging operation. The two working units (16, 18) are mounted on the support structure (14, 26) so as to be able to rotate about an axis of rotation (X) parallel to the working direction between a horizontal working position and a raised non-working position. The hoeing device (20) includes a working head which can slide transversely to the working direction between a retracted position and an extended position and comprises a rotary disc (64) carrying a plurality of hoeing tools (66) and a motor (68) operable to drive the working disc (64) for rotation.

## Description

The present invention relates to a tilling apparatus for vineyards and orchards of the carried type, i.e. arranged to be attached to an agricultural tractor and operated by it.

In order to till the soil between one plant and the other along rows of arboreal crops, such as vineyards and orchards, particularly in order to remove weeds, so-called inter-stock ploughs with sensing devices are commonly used which typically include a frame for attachment to the agricultural tractor, a working unit carried by the frame and a sensing device. The working unit comprises a set of rotatable discs arranged to carry out either a hoeing operation or a ridging operation on the soil. Typically, smooth discs are used for the hoeing operation, whereas toothed discs are used for the ridging operation. The discs are driven for rotation either mechanically by means of a transmission mechanism operated by the power take-off of the tractor or hydraulically by means of a hydraulic operating unit installed on the tractor. The working unit is mounted at the end of a support arm carried by the frame so as to be able to tilt about a vertical tilting axis. As a result of the support arm tilting about its own vertical tilting axis, the working unit can be moved between an inter-stock position, in which the support arm extends substantially perpendicularly to the forward direction of the tractor and the working unit is interposed between pairs of consecutive stocks to till the portion of soil comprised therebetween, and a retracted position, in which the support arm is rotated towards the inter-row area and the working unit is therefore not able to till the portion of soil between pairs of consecutive stocks. The sensing device serves to detect the presence of a stock to allow to move the working unit automatically towards the inter-row area every time the unit abuts against the stock of a plant and to bring the working unit back to the inter-stock position as soon as the stock has been passed.

The known inter-stock ploughs with sensing devices suffer however from the shortcoming that the set of discs is able to perform only one type of operation (hoeing or ridging) and it is therefore necessary to change the set of discs whenever it is necessary to switch from a hoeing operation to a ridging operation and vice versa. This evidently results in an increase in the time required for tilling the soil.

A further disadvantage of the known inter-stock ploughs with sensing devices is represented by the fact that the return movement of the working unit from the inter-row position to the inter-stock position whenever the working unit passes a plant stock, which movement takes place by tilting of the support arm about its own vertical tilting axis, leads to a portion of soil area of approximately triangular shape immediately downstream of the stock remaining untilled. The working unit is in fact able to return from the inter-row position to the inter-stock position, and hence to till the soil portion between two consecutive stocks, only once the tractor has passed the plant stock by a length equal to the distance between the radially outer end of the working unit and the tilting axis of the support arm. It is therefore not possible, with an apparatus of this kind, to ensure that the soil portion between the stocks is perfectly and completely tilled.

A first object of the present invention is therefore to provide an apparatus for tilling vineyards and orchards which allows to carry out just in one way the tilling of the soil between the stocks of a row of arboreal crops, such as vineyards and orchards, with no need to change tools after the hoeing or ridging operation.

This object is fully achieved according to the present invention by virtue of an apparatus for tilling vineyards and orchards having the characteristics defined in the characterizing portion of independent claim 1.

A further object of the present invention is to provide an inter-stock hoeing device for vineyards and orchards which allows to till completely the soil area comprised between the stocks of a row of arboreal crops, such as vineyards and orchards, without leaving untilled soil portions.

This further object is fully achieved according to the present invention by virtue of an inter-stock hoeing device for vineyards and orchards having the characteristics defined in the characterizing portion of independent claim 22.

Further advantageous characteristics of the present invention are the subject of the dependent claims.

The invention will be described hereinafter in greater detail, purely by way of non-limiting example, with reference to the appended drawings, in which:
Figure 1 is a side perspective view of an agricultural tractor provided with a tilling apparatus for vineyards and orchards according to the present invention, in which a front working unit and a rear working unit of the tilling apparatus are both arranged in the horizontal working position;
Figure 2 is a view similar to that of Figure 1, in which the front working unit of the tilling apparatus is arranged in the raised non-working position;
Figure 3 is a three-quarter perspective view of the agricultural tractor of Figures 1 and 2, in which both the working units of the tilling apparatus are arranged in the raised non-working position;
Figure 4 is a perspective view on an enlarged scale of the two working units of the tilling apparatus according to the invention, in the raised non-working position;
Figure 5 is a perspective view on an enlarged scale of the front end of an attachment frame of the tilling apparatus according to the invention;
Figure 6 is a partial cut-out assonometric view of an angular gear of the rear working unit of the tilling apparatus according to the invention;
Figures 7 and 8 are a side perspective view and a rear perspective view, respectively, of the agricultural tractor of Figure 1 during the tilling of the soil between the stocks of a row of fruit trees;
Figure 9 is a perspective view of a tilling apparatus for vineyards and orchards similar to that of Figure 1, but provided with an inter-stock hoeing device according to a preferred embodiment of the present invention;
Figure 10 is a perspective view on an enlarged scale which shows in detail the inter-stock hoeing device mounted at the front end of the tilling apparatus of Figure 9;
Figures 11 and 12 are perspective views of a variant of construction of a tilling apparatus for vineyards and orchards, which differs from that of Figures 9 and 10 in that the working units and the hoeing device are arranged behind the tractor in the condition of attachment to the tractor itself; and
Figures 13 and 14 are perspective views of a variant of construction of a tilling apparatus for vineyards and orchards provided only with the inter-stock hoeing device of Figures 9 to 12.

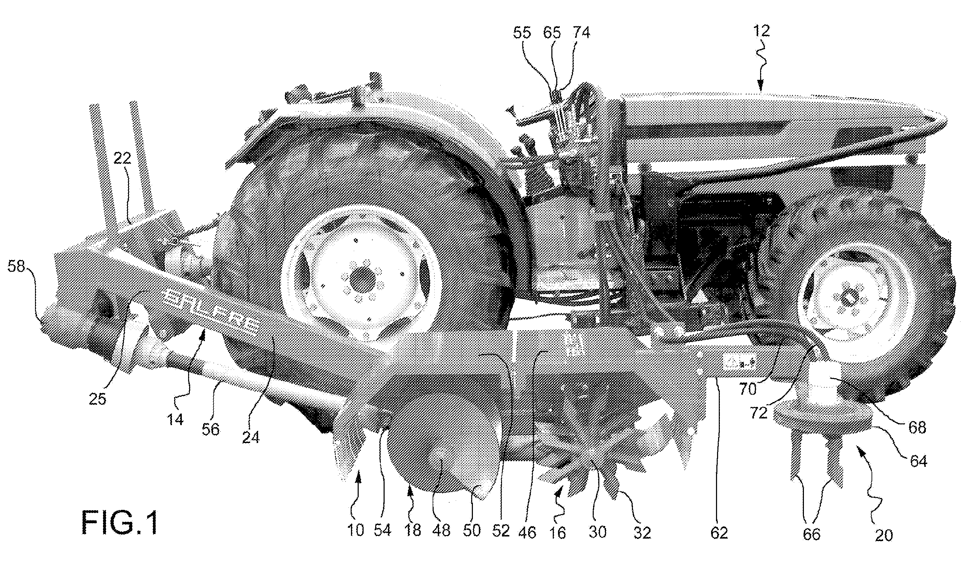

With reference first to Figures 1 to 3, an apparatus for tilling vineyards and orchards according to a first preferred embodiment of the present invention is generally indicated 10. The tilling apparatus 10 is of the carried type, i.e. of the type arranged to be attached to an agricultural tractor 12 and operated by it, and basically comprises a frame 14 for attachment to the tractor 12, a pair of working units 16 and 18 and an inter-stock hoeing device 20.

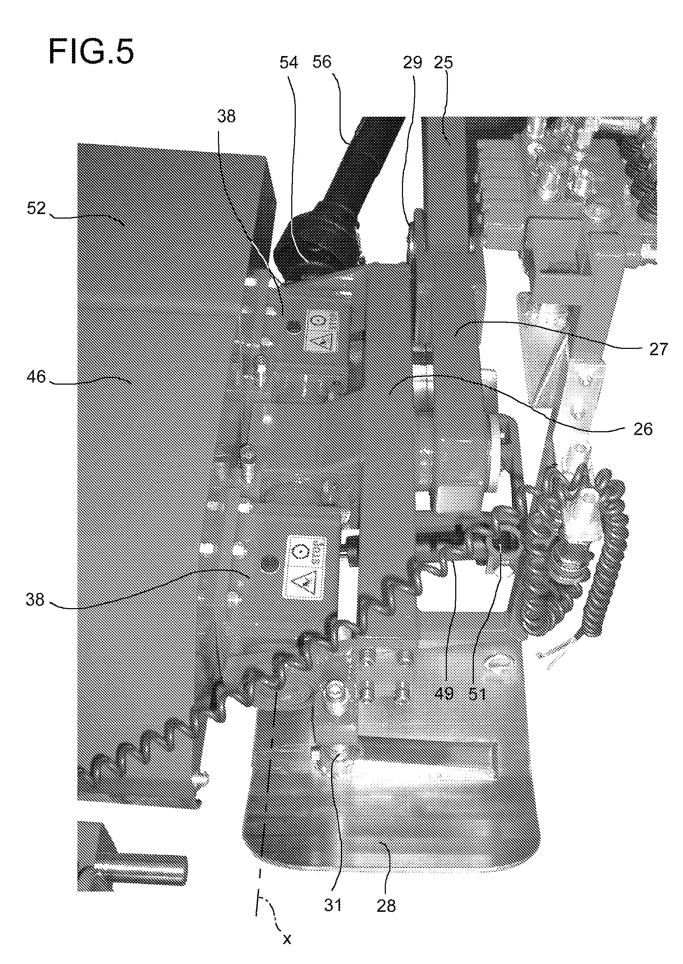

The frame 14 has a substantially L-shaped general configuration, with a transverse arm 22 which extends perpendicularly to the driving direction of the tractor 12 and is attached to a pair of lifting arms (not shown) of this latter, with a side arm 24 which extends parallel to the driving direction of the tractor 12 from an end (in the illustrated example the right-hand end) of the transverse arm 22, and with a support structure 26 attached to the free end of the side arm 24 so as to be placed, in the condition of attachment of the apparatus 10 to the tractor 12, substantially at the side of the driving seat of the operator. The transverse arm 22 is advantageously made as a telescopic arm to allow the transverse position of the side arm 24 to be adjusted depending on the width of the tractor 12 intended to carry the apparatus 10. The side arm 24 is comprised of a rear arm portion 25 extending forwards and downwards from the transverse arm 22 and of a front arm portion 27 connected to the front end of the rear arm portion 25 by means of a hinge joint 29 (Figure 5). The support structure 26 is attached to the front arm portion 27. The support structure 26 is provided, at its lower end, with a shoe (or with a roller, according to a non-illustrated variant of construction) 28 serving to make the movement of the support structure on the soil during operation easier. The vertical distance between the shoe 28 and the support structure 26, and hence the height to ground of this latter, can be adjusted by means of screws 31, only one of which is shown in Figure 5.

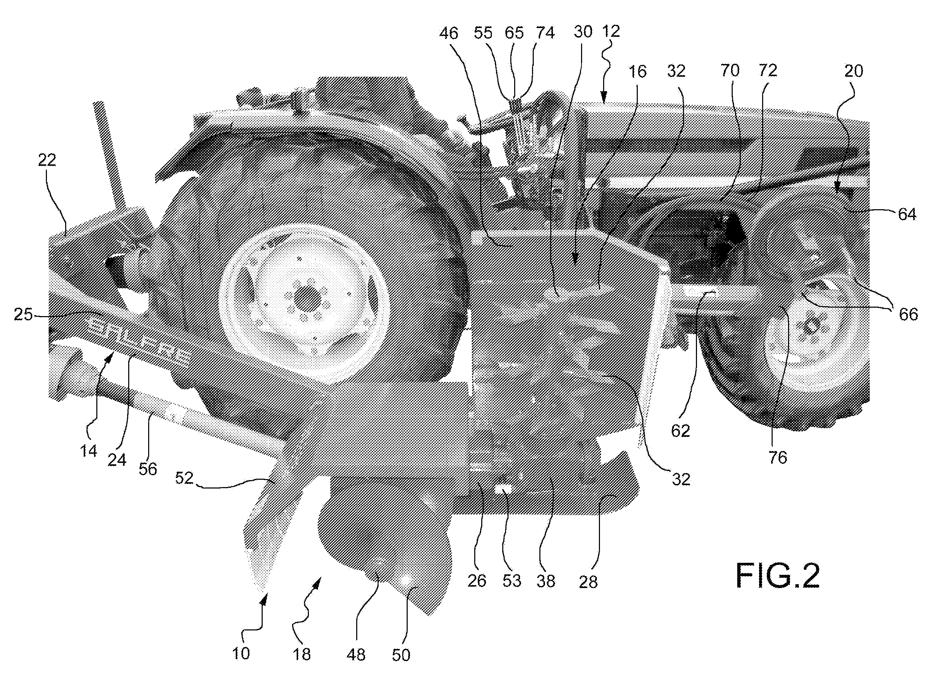

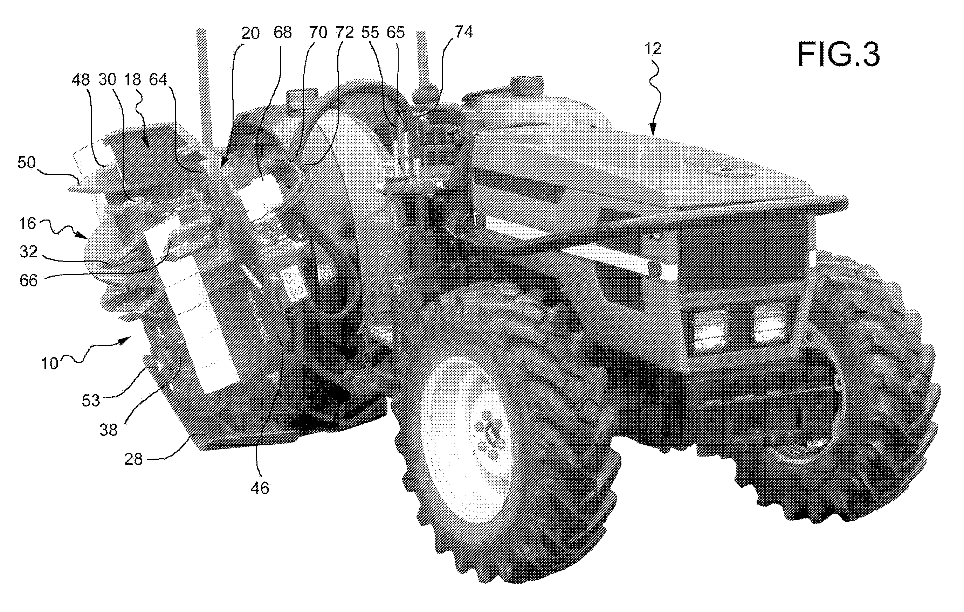

The two working units 16 and 18 are mounted on the support structure 26 of the frame 14 so as to be able to rotate about a horizontal and longitudinal axis of rotation X between a substantially horizontal working position and a raised non-working position, in which the two working units 16 and 18 are inclined to a horizontal plane by an angle preferably greater than 45°. In Figure 1 both the working units 16 and 18 are in the working position, in Figure 2 the working unit 16 is in the non-working position whereas the working unit 18 is in the working position, and finally in Figure 3 both the working units 16 and 18 are in the non-working position.

The front working unit 16 is arranged to carry out the rotary tilling of the soil in order to mince the soil and remove weeds. The rear working unit 18 is arranged to carry out a ridging operation on the soil.

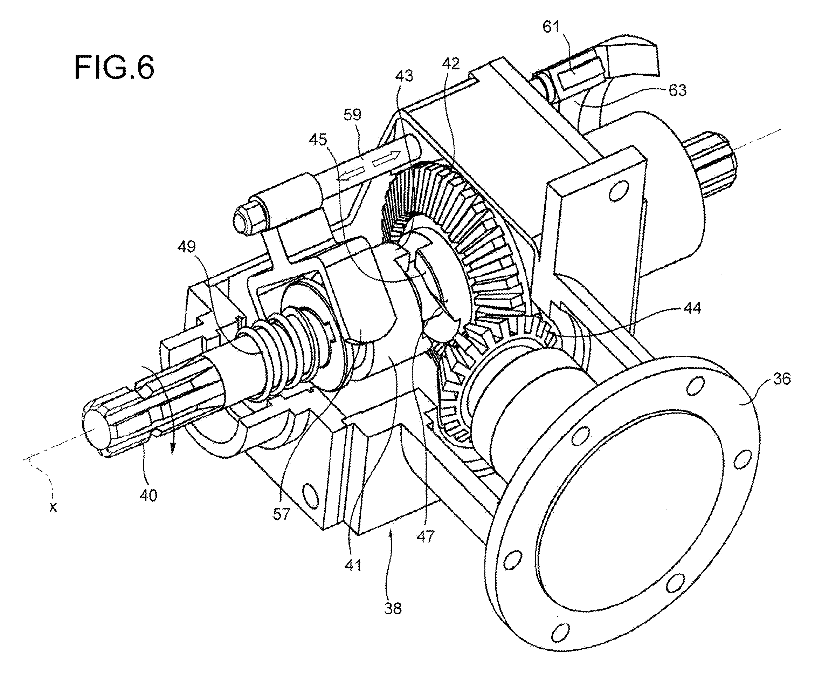

The front working unit 16 comprises a driven rotating shaft 30 which extends perpendicularly to the driving direction of the tractor and carries a plurality of rotary tilling tools 32 made as bits or radial knives and angularly spaced according to a helical arrangement. At its transversely inner end, the driven shaft 30 forms an attachment flange 34 which is secured to a corresponding take-off flange 36 of an angular gear 38, shown in detail in Figure 6.

The angular gear 38 has the function of converting the rotational movement of an input shaft 40, the axis of which coincides with the aforesaid axis of rotation X, into the rotational movement of the take-off flange 36, and hence of the driven shaft 30. The angular gear 38 basically includes a face gear 42 with front teeth idly mounted on the input shaft 40, a bevel gear 44 drivingly connected for rotation with the take-off flange 36, and a sliding engagement sleeve 41 drivingly connected for rotation with the input shaft 40. The engagement sleeve 41 is provided with front engagement teeth 43 arranged to mesh with corresponding front engagement teeth 45 of the face gear 42 and is axially urged by a spring 49 towards the face gear 42 so as to ensure that the front engagement teeth 43 and 45 mesh with one another and that the torque is therefore transmitted from the input shaft 40 to the face gear 42. The front teeth 45 of the face gear 42 form an inclined surface 47 on a flank thereof so as to ensure that the engagement teeth 43 and 45 are coupled for rotation with one another, and that the torque is therefore transmitted from the input shaft 40 to the face gear 42 only in a given direction of rotation (clockwise direction in the illustrated example).

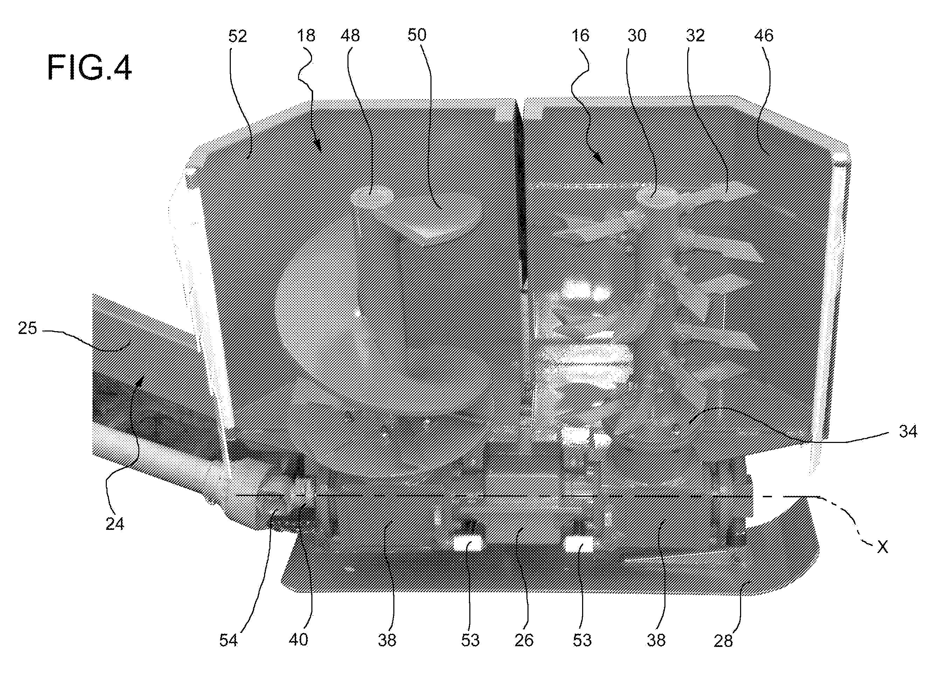

The angular gear 38 is mounted on the support structure 26 so as to be able to rotate about the axis of rotation X. The rotational movement of the angular gear 38, along with the respective working unit 16, between the working position and the non-working position is controlled by a special hydraulic jack 49 which is articulated at its transversely inner end to the support structure 26 by means of a bush 51 (Figure 5) and at its transversely outer end to the angular gear 38 by means of a bush 53 (Figure 4). The hydraulic jack 49 is manoeuvred by the operator through a first control lever 55 which is mounted on a console arranged alongside the steering wheel of the tractor 12 so as to be easily accessible to the operator sitting on the driving seat.

For safety reasons, the angular gear 38 is configured in such a manner that it uncouples the driven shaft 30 from the input shaft 40 when the front working unit 16 is moved into the raised non-working position. Such an uncoupling occurs automatically as soon as the angle of inclination of the working unit 16 to the horizontal exceeds a given value (for instance 45°). To this end, the angular gear 38 includes an actuating fork 57 intended to move the engagement sleeve 41 axially away from the face gear 42 to uncouple the front engagement teeth 43 and 45 of that wheel and of the engagement sleeve. The actuating fork 57 is mounted at an end of a rod 59 which can slide parallel to the axis of rotation X. At the opposite end, the sliding rod 59 is provided with a roller 61 which rests against a cam surface 63. The cam surface 63 is shaped in such a manner that, as a result of a rotation of the whole angular gear 38 about the axis of rotation X from the horizontal working position to the raised non-working position, the sliding rod 59 and the actuating fork 57 are urged against the force of the spring 49 (to the left with respect to a person observing Figure 6) until the front engagement teeth 43 and 45 of the engagement sleeve 43 and of the face gear 42, respectively, are caused to disengage from each other.

The front working unit 16 further includes a protection housing 46 which covers the driven shaft 30, as well as the rotary tilling tools 32 carried by it, from above.

The rear working unit 18 comprises a driven rotating shaft 48 which extends perpendicularly to the driving direction of the tractor and carries a ridging tool 50 in the shape of an auger. The shaft 48 also carries, at its transversely inner end, an attachment flange (not visible in the drawings) secured to a corresponding take-off flange (also not visible in the drawings) of a further angular gear, which is indicated with the same reference numeral 38 as the angular gear associated to the front working unit 16 as it is of identical structure and operation. As explained above with reference to the first working unit 16, also the rotational movement of the second working unit 18 between the working position and the non-working position is controlled by a hydraulic jack 49, which is articulated at its transversely inner end to the support structure 26 by means of a bush 51 and at its transversely outer end to the angular gear 38 by means of a bush 53. The hydraulic jack 49 of the second working unit 18 is manoeuvred by the operator through a second control lever 65 mounted on the aforesaid console. According to an advantageous aspect of the present invention, the tilling apparatus 10 is provided, for each hydraulic jack 49, with a respective high-pressure (for example 100 bar) gas (preferably nitrogen) reservoir serving as a balance tank, in such a manner that the respective working unit is urged against the ground with a force sufficient to prevent the working unit from getting detached from the ground whenever the working unit encounters a greater resistance in operation.

Also the rear working unit 18 further includes a protection housing 52 which covers the driven shaft 48 and the ridging tool 50 carried by it from above.

The angular gears 38 of the two working units 16 and 18 are configured in such a manner that they cause the driven shafts 30 and 48 of the respective working units in opposite directions for the same direction of rotation of the input shaft 40.

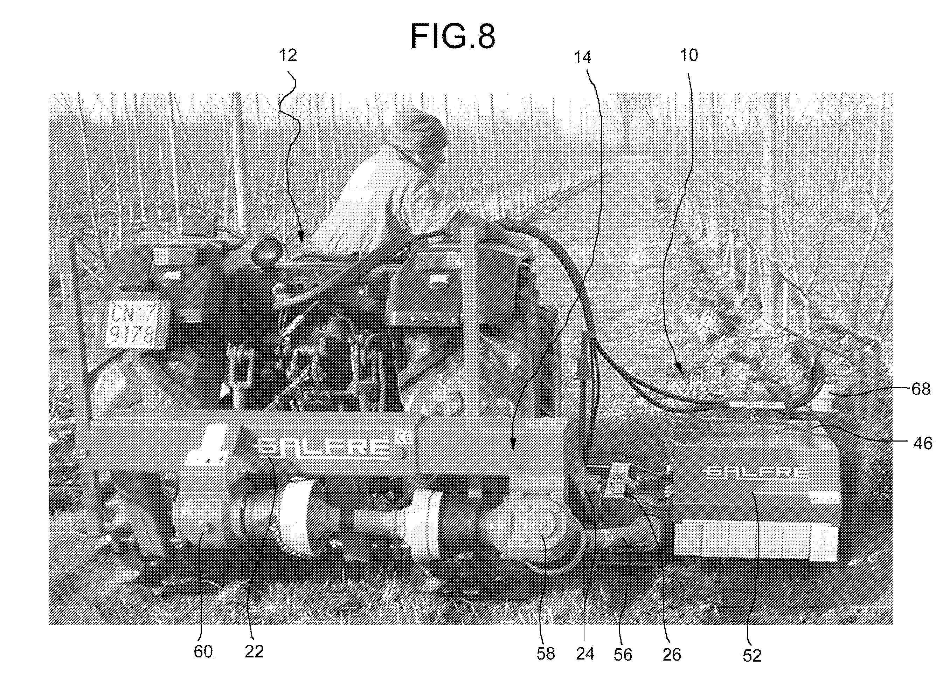

The input shaft 40 which drives the angular gears 38 associated to the two working units 16 and 18 is actuated via a gimbal joint 54 by a transmission shaft 56, which in turn is driven by the power take-off of the tractor 12 through a transmission train comprising two further angular gears 58 and 60 (which can be seen in Figure 8) carried by the transverse arm 22 of the frame 14.

The hoeing device 20 which serves to carry out the hoeing of the soil between the stocks of the plants is mounted onto the protection housing 46 of the front working unit 16 and is therefore fast for rotation with this working unit about the axis of rotation X, as can be noted in particular from Figure 2, where both the front working unit 16 and the hoeing device 20 are arranged in the raised non-working position. The hoeing device 20 includes a disc 64 carrying on its lower face a plurality of vertical tools 66 in the shape of bits or knives and a motor 68 operable to drive the disc 64 for rotation about a vertical axis of rotation. Preferably, the motor 68 is a hydraulic motor and is connected by means of supply and discharge hoses 70 and 72, respectively, to a supply unit and to a tank (both not illustrated) of the tractor 12. The motor 68 can be controlled by the operator by means of a control lever 74 mounted onto the aforesaid console alongside the steering wheel.

In the embodiment shown in Figures 1, 2, 3, 7 and 8, the hoeing device 20 is carried by a swing arm 76 (which can be better seen in Figure 2) articulated to a support beam 62, as in the prior art discussed in the introductory part of the description. The support beam 62 is secured to the protection housing 46 of the front working unit 16 and extends forwards parallel to the driving direction of the tractor 12. The swing arm 76 is held by resilient means (per-se-known and not illustrated) in an extended position, in which it extends substantially perpendicularly to the driving direction of the tractor 12, and can swing backwards when the disc 64 abuts against a plant stock during the tilling of the soil.

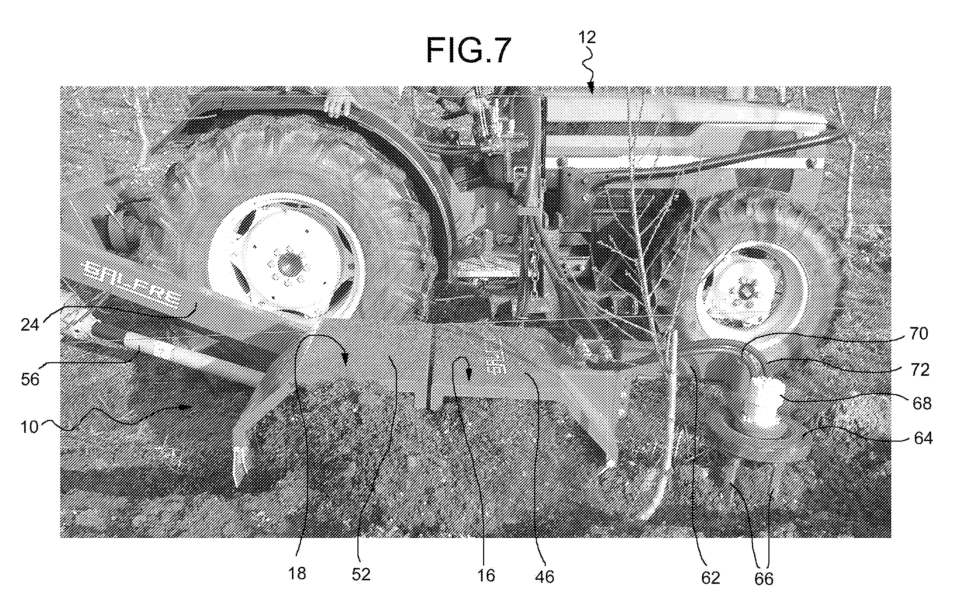

As can be understood in the light of the above description, and as results also from the observation of Figures 7 and 8, by virtue of the fact that the tilling apparatus of the invention includes a hoeing device and at least one of a working unit arranged to carry out a rotary tilling operation and a working unit arranged to carry out a ridging operation, it is possible to complete just in one way the tilling of the soil between the stocks of a row of arboreal crops, such as vineyards and orchards, with no need to change tool after the hoeing operation. A significant advantage is thereby achieved in terms of reduction of time, and hence also of costs.

As they are separated from each other, the two working units are free to tilt independently of each other about their horizontal axes of rotation, which enables to better adapt to the unevenness of the ground and to the obstacles the working units may incur in during operation.

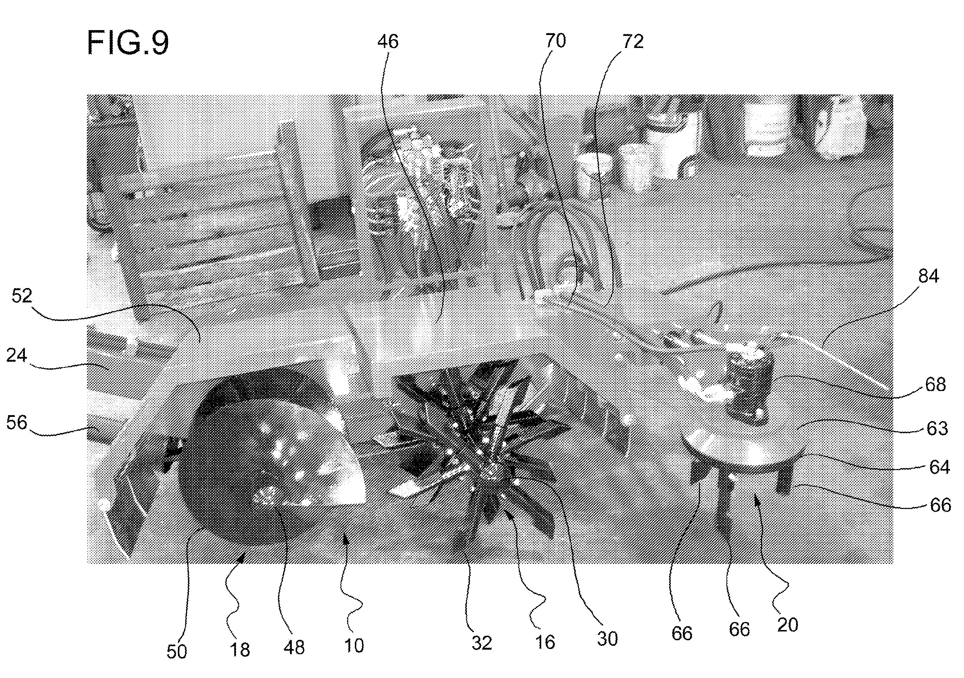

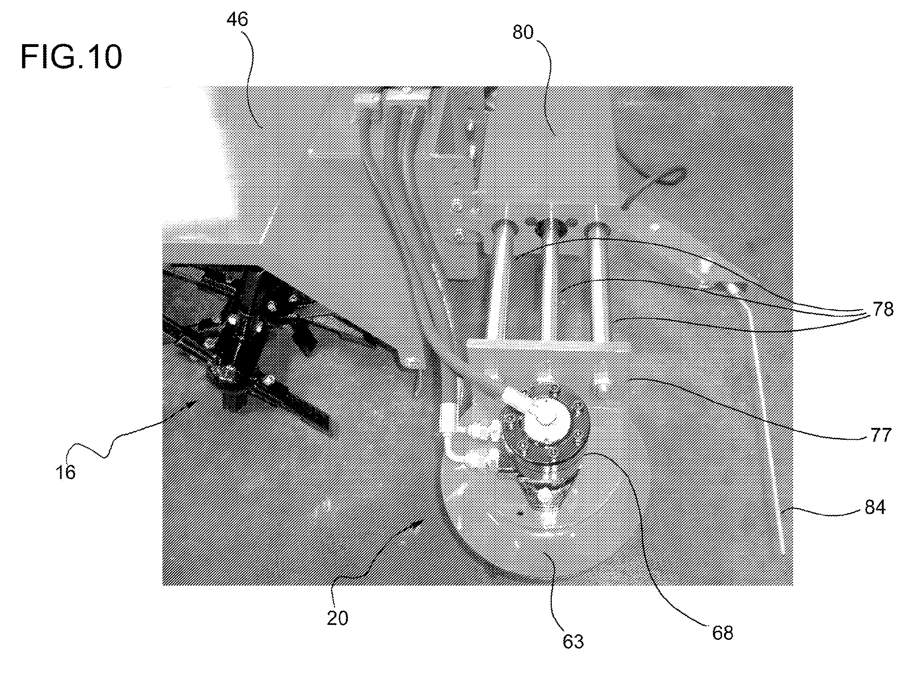

Figures 9 and 10 illustrate a further embodiment of the tilling apparatus for vineyards and orchards according to the invention, which differs from the one illustrated in the preceding figures mainly in the way of mounting of the hoeing device. Therefore, only the features of the apparatus which differ from those described above with reference to the embodiment of Figures 1 to 8 will be described in detail hereinafter, being it clear that reference to the description provided above is to be made for all the remaining features in common.

With reference to Figures 9 and 10, in which parts and elements identical or corresponding to those of Figures 1 to 8 have been given the same reference numerals, the hoeing device 20 includes a working head comprising a housing 63, a disc 64 rotatable about a vertical axis of rotation and carrying on its lower face a plurality of vertical tools 66 in the shape of bits or knives, and a rotary motor 68 operable to drive the disc 64 for rotation. Preferably, the motor 68 is a hydraulic motor and is connected by means of supply and discharge hoses 70 and 72, respectively, to a supply unit and to a tank of the tractor (not shown in Figures 9 and 10).

The housing 63 of the hoeing device 20 is mounted through an attachment flange 77 to the transversely outer ends of at least two (three, in the illustrated embodiment) guiding rods 78 which can slide transversely within a support body 80 secured to the front working unit 16 of the tilling apparatus 10. The working head of the hoeing device 20 can thus be moved by means of a hydraulic actuator (per-se-known and not shown) under control of a solenoid valve (also not shown) between a retracted position (not shown) and an extended position (shown in Figures 9 and 10), in which the working head projects transversely outwards to such an extent as to be able to till the soil between the plant stocks. The support body 80 further carries a sensing device 84 which is arranged forwardly of the hoeing device 20, in the driving or working direction, and is operatively connected to the solenoid valve which controls the movement of the working head of the hoeing device 20. In this manner, when the sensing device 84 encounters a plant stock during operation, the sensing device is moved into a working position in which the solenoid valve is driven so as to move the working head of the hoeing device 20 into the retracted position and thus to make it possible to pass the stock. Once passed the plant stock, the sensing device 84 moves back into the initial rest position and thus causes the working head of the hoeing device 20 to move back into the extended working position by means of the solenoid valve.

By virtue of the working head of the hoeing device being displaceable in a direction perpendicular to the driving direction of the apparatus on which the device is installed (in other words, the direction of extension of the row), instead of being rotatable about a vertical axis of rotation, the hoeing device is able to till the portion of soil immediately adjacent the plant stock just passed, without leaving any portion of soil untilled. Furthermore, such a hoeing device is able to till the soil between the stocks of vineyards and orchards also in case of small distances (provided they are greater than the overall size of the working head) between one stock and the other, whereas a hoeing device according to the prior art discussed in the introductory part of the description requires a distance between the stocks much greater than the overall size of the working head.

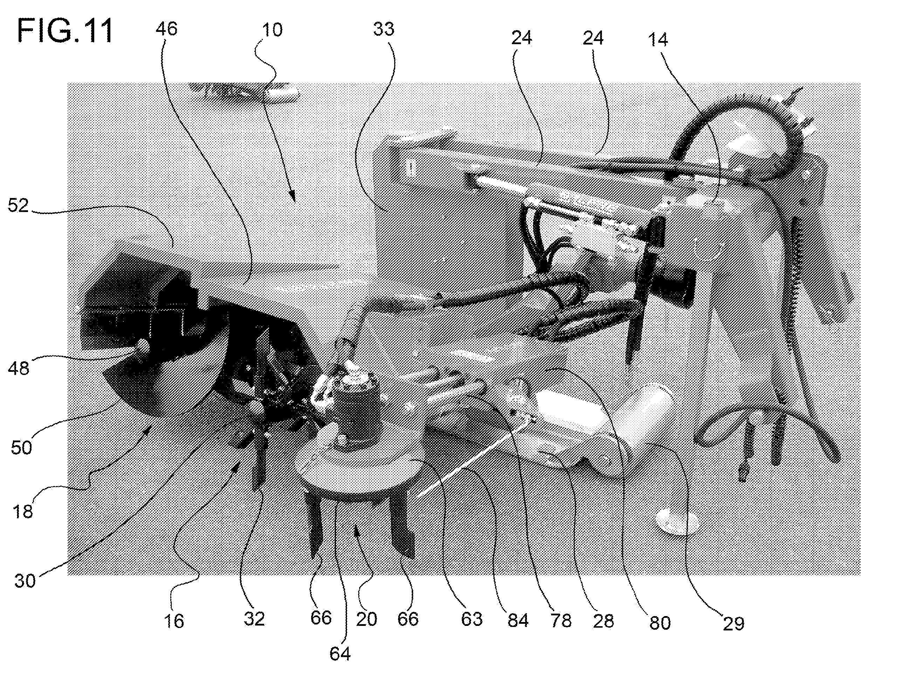

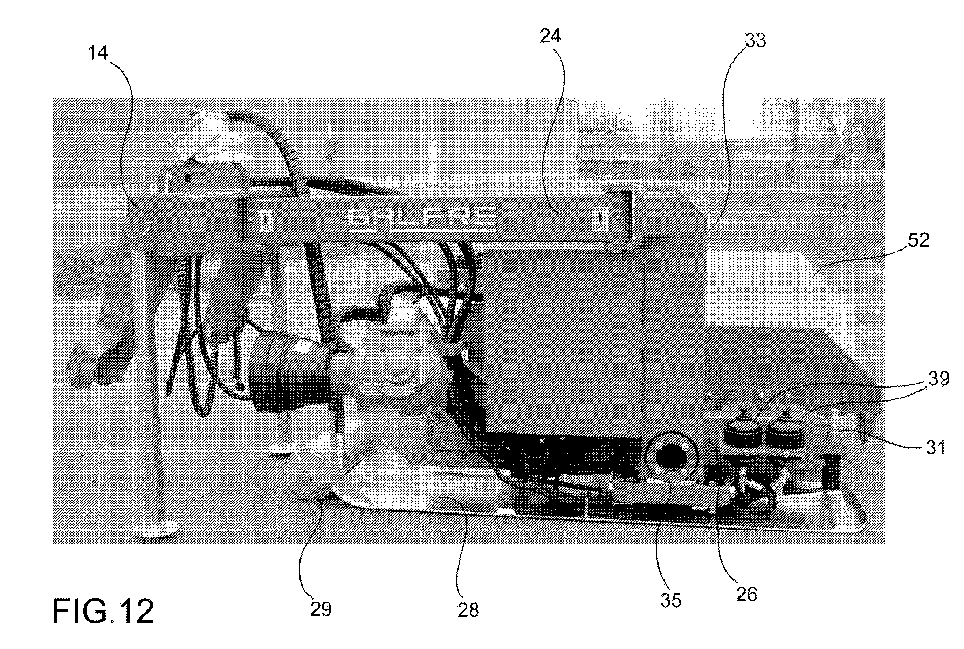

Figures 11 and 12 illustrate a variant of construction of a tilling apparatus for vineyards and orchards, which differs from that of Figures 9 and 10 substantially only in that the working units and the hoeing device are arranged behind the tractor (not shown) in the condition of attachment to the tractor itself. Only the features of the tilling apparatus which differ from those described above with reference to the embodiment of Figures 9 and 10 will be illustrated hereinafter, being it clear that reference is to be made to the description provided above for all the remaining features in common.

With reference to Figures 11 and 12, in which parts and elements identical or corresponding to those of Figures 9 and 10 have been given the same reference numerals, the support structure 26, on which the front working unit 16 (on which the hoeing device 20 is mounted) and the rear working unit 18 are supported so as to be able to rotate about a horizontal axis of rotation parallel to the driving direction of the tractor (working direction), is articulated to a strut 33 by means of an articulation bush 35 so as to be able to swing relative to the strut 33 about a transverse horizontal axis, i.e. an axis perpendicular to the driving or working direction. The strut 33 is in turn connected to the frame 14 by means of a pair of parallel longitudinal arms 24 articulated at their front ends to the frame 14 and at their rear ends to the strut 33 so as to define an articulated quadrilateral mechanism which makes it possible to move transversely the strut 33, and hence the support structure 26 with the working units 16 and 18, to set the transverse position of the tools 32 and 50. A hydraulic jack 37 (shown only in Figure 11) interposed between the frame 14 and one of the two arms 24 and oriented obliquely relative to this latter is provided to actuate the articulated quadrilateral mechanism formed by the longitudinal arms 24.

The support structure 26 is provided at its bottom with a shoe 28 equipped at its front end with a roller 29 to make the movement of the tilling apparatus 10 on the soil during operation easier. The vertical distance between the shoe 28 and the support structure 26, and hence the height to ground of this latter, can be adjusted by means of screws 31, only one of which is shown in Figure 12.

Figure 12 also show the two high-pressure gas reservoirs, which are indicated 39 and serve as balance tanks for the hydraulic jacks (not shown in Figures 11 and 12) which drive the two working units 16 and 18 for rotation between the respective working (lowered) position and non-working (raised) position.

As far as the working units 16 and 18 are concerned, what has already been explained with reference to the embodiment of Figures 1 to 8 applies. On the other hand, as far as the hoeing device 20 is concerned, what has already been stated with reference to the embodiment of Figures 9 and 10 applies.

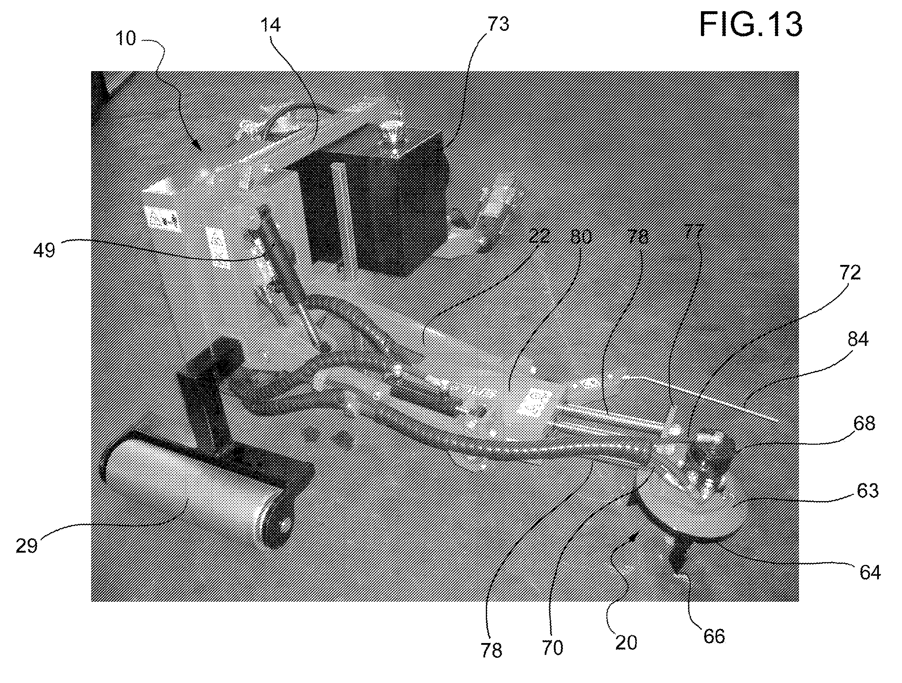

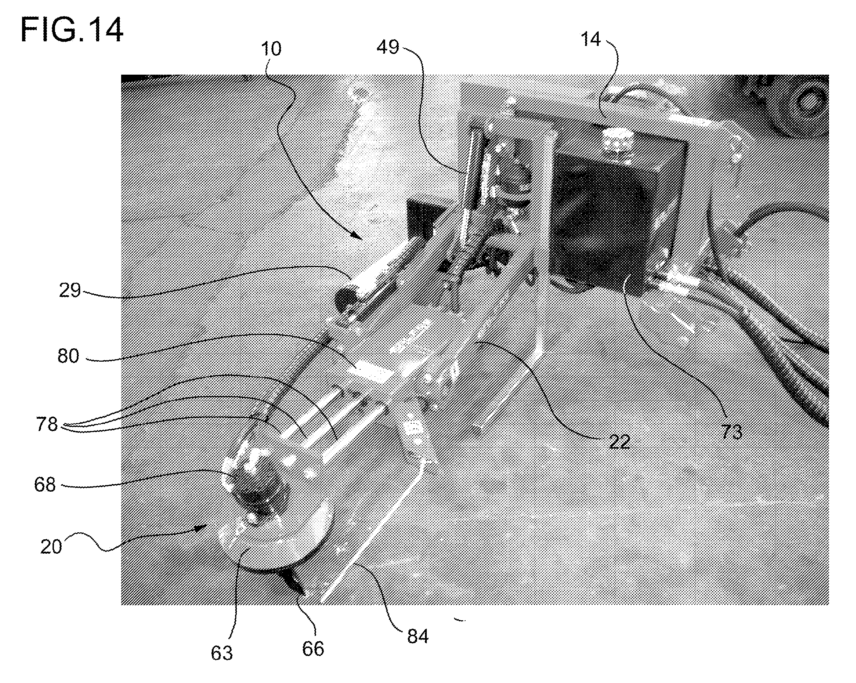

Figures 13 and 14 finally illustrate a variant of construction of a tilling apparatus for vineyards and orchards which is only provided with an inter-stock hoeing device of the type of the one provided for in the tilling apparatuses illustrated in Figures 9 to 12.

With reference to Figures 13 and 14, in which parts and elements identical or corresponding to those of Figures 9 to 12 have been given the same reference numerals, a tilling apparatus for vineyards and orchards is generally indicated 10 and includes a frame 14 intended to be attached to a tractor (not shown), a transverse arm 22 which extends perpendicularly to the working direction of the apparatus and is mounted on the frame 14 so as to be able to tilt between a substantially horizontal working position (shown in the drawings) and a raised non-working position (not shown), and an inter-stock hoeing device 20 mounted at the transversely outer end of the transverse arm 22. The frame 14 is provided with a roller 29 for allowing the apparatus 10 to roll on the soil. The tilting movement of the transverse arm 22 is controlled by a hydraulic jack 49 interposed between the transverse arm 22 and the frame 14.

The hoeing device 20 includes a working head comprising a housing 63, a disc 64 which can rotate about a vertical axis of rotation and carries on its lower face a plurality of vertical tools 66 in the form of bits or knives, and a rotary motor 68 operable to drive the disc 64 for rotation. Preferably, the motor 68 is a hydraulic motor and is connected by means of supply and discharge hoses 70 and 72 to a supply unit 73 carried by the frame 14, the supply unit being also arranged to supply the hydraulic jack 49 with fluid under pressure for raising or lowering the transverse arm 22. The housing 63 of the hoeing device 20 is mounted through an attachment flange 77 to the transversely outer ends of at least two (three, in the illustrated example of construction) guiding rods 78 slidable in the transverse direction within a support body 80 secured to the transversely outer end of the transverse arm 22. The working head of the hoeing device 20 can thus be moved by means of a hydraulic actuator (per-se-known and not shown) under the control of a solenoid valve (also not shown) between a retracted position (not shown) and an extended position (shown both in Figure 13 and in Figure 14), in which the working head projects transversely outwards to such an extent that it is able to till the soil between the plant stocks. The support body 80 further carries a sensing device 84 which is placed forwardly of the hoeing device 20, in the driving or working direction, and is operatively connected to the solenoid valve controlling the movement of the working head of the hoeing device 20. In this way, when the sensing device 84 encounters a plant stock during operation, the sensing device is moved into a working position in which the solenoid valve is driven so as to cause the working head of the hoeing device 20 to move into the retracted position, thereby making it possible to pass the stock. As soon as the plant stock has been passed, the sensing device 84 moves back into the initial rest position and thus causes, by means of the solenoid valve, the working head of the hoeing device 20 to move back into the extended working position.

The same advantages as those indicated above with reference to the embodiment of Figures 9 and 10, which are also valid for the embodiment of Figures 11 and 12, naturally apply also to the embodiment of Figures 13 and 14, as the way according to which the working head of the hoeing device is moved is the same.

Naturally, the principle of the invention remaining unchanged, the embodiments and constructional details may vary widely with respect to those described and illustrated purely by way of non-limiting example, without thereby departing from the scope of the invention as defined in the attached claims.

For example, the working units of the embodiment of Figures 1 to 8 might be operated not mechanically by the power take-off of the tractor, but hydraulically, as well as the disc of the working head of the hoeing device might be operated not by a hydraulic motor, but for example by an electric motor.

Moreover, the hoeing device provided with a transversely slidable working head (Figures 9 to 14) may be mounted on any kind of tilling apparatus, both in combination with other tools (as for example in the two embodiments of Figures 9 to 12) and alone (as for example in the embodiment of Figures 13 and 14).

## Claims

1. Apparatus (10) for tilling vineyards and orchards, intended to be attached to an agricultural tractor (12) to be driven by this latter along a working direction substantially coinciding with the driving direction of the tractor (12), the apparatus comprising:
a support structure (14, 26),
a hoeing device (20) mounted on the support structure (14, 26) and arranged to carry out an inter-stock hoeing operation, and
a first working unit (16) which is mounted on the support structure (14, 26) downstream of the hoeing device (20) with respect to the working direction and is arranged to perform a first inter-row tilling operation on the soil, in particular a rotary tilling operation.

2. Apparatus according to Claim 1, wherein the first working unit (16) comprises a first driven rotating shaft (30) which carries first tool means (32) for performing the first inter-row tilling operation.

3. Apparatus according to Claim 2, wherein the first driven shaft (30) extends perpendicularly to the working direction and wherein the first working unit (16) is mounted on the support structure (14, 26) so as to be able to rotate about an axis of rotation (X) parallel to the working direction between a substantially horizontal working position and a raised non-working position.

4. Apparatus according to Claim 3, wherein in the non-working position the first working unit (16) is inclined by an angle equal to or greater than 45 degrees relative to the soil.

5. Apparatus according to any of Claims 2 to 4, wherein the first tool means (32) are made as radial bits or knives angularly offset according to a helical arrangement to perform a rotary tilling operation on the soil.

6. Apparatus according to any of the preceding claims, further comprising a second working unit (18) which is mounted on the support structure (14, 26) downstream of the first working unit (16) with respect to the working direction and is arranged to perform a second inter-row tilling operation on the soil which is different from the first one, in particular a ridging operation.

7. Apparatus according to Claim 6, wherein the second working unit (18) comprises a second driven rotating shaft (48) which carries second tool means (50) for performing the second inter-row tilling operation.

8. Apparatus according to Claim 7, wherein the second driven shaft (48) extends perpendicularly to the working direction and wherein the second working unit (18) is mounted on the support structure (14, 26) so as to be able to rotate about an axis of rotation (X) parallel to the working direction between a substantially horizontal working position and a raised non-working position.

9. Apparatus according to Claim 8, wherein in the non-working position the second working unit (18) is inclined by an angle equal to or greater than 45 degrees relative to the soil.

10. Apparatus according to any of Claims 7 to 9, wherein the second tool means (50) consist of an auger-like tool adapted to perform a ridging operation.

11. Apparatus according to any of Claims 3, 4, 8 and 9, further comprising an input shaft (40) intended to be coupled to an outer power source and a first angular gear (38) interposed between the input shaft (40) and the first driven shaft (30) to transmit the motion from the input shaft (40) to the first driven shaft (30).

12. Apparatus according to Claim 11 and according to any of Claims 7 to 10, further comprising a second angular gear (38) interposed between the input shaft (40) and the second driven shaft (48) to transmit the motion from the input shaft (40) to the second driven shaft (48).

13. Apparatus according to Claim 11 or Claim 12, wherein the axis of the input shaft (40) substantially coincides with the axis of rotation (X) of each working unit (16, 18).

14. Apparatus according to any of Claims 11 to 13, wherein each angular gear (38) includes disengagement means (57, 59, 61, 63) for uncoupling the driven shaft (30, 48) of the respective working unit (16, 18) from the input shaft (40) when the respective working unit (16, 18) is in the raised non-working position.

15. Apparatus according to Claim 14, wherein each angular gear (38) includes an input gear (42) idly mounted on the input shaft (40), a sliding engagement sleeve (41) arranged to couple the input gear (42) for rotation with the input shaft (40) and resilient means (49) acting on the sliding engagement sleeve (41) to hold the input gear (42) coupled for rotation with the input shaft (40), and wherein said disengagement means (57, 59, 61, 63) are arranged to act on the sliding engagement sleeve (41) against the action of said resilient means (49).

16. Apparatus according to Claim 15, wherein said disengagement means (57, 59, 61, 63) include an actuating fork (57) operatively associated to the engagement sleeve (41) and cam means (61, 63) arranged to operate the actuating fork (57) so as to uncouple the input gear (42) from the input shaft (40) when the respective working unit (16, 18) reaches the raised non-working position.

17. Apparatus according to any of Claims 3, 4, 8 o 9, further comprising hydraulic control means (49, 55) for driving each working unit (16, 18) for rotation between the working position and the non-working position.

18. Apparatus according to any of the preceding claims, wherein the hoeing device (20) includes a working head comprising a rotary disc (64) carrying a plurality of hoeing tools (66) and motor means (68) for driving the working disc (64) for rotation.

19. Apparatus according to any of the preceding claims, wherein the working head of the hoeing device (20) is slidable transversely to the working direction between a retracted position and an extended position.

20. Apparatus according to Claim 19, further comprising control means (82) for controlling the movement of the working head of the hoeing device (20) between the retracted position and he extended position and sensor means (84) operatively connected to said control means (82) to control the movement of the working head of the hoeing device (20) back into the retracted position in case of contact with the stock of a plant.

21. Apparatus according to Claim 19 or Claim 20, further comprising a support body (80) mounted on the first working unit (16) and a plurality of guiding rods (78) transversely slidable within the support body (80), the working head of the hoeing device (20) being secured to the transversely outer ends of the guiding rods (78) and the control means (82) being arranged to control the sliding movement of the guiding rods (78).

22. Apparatus according to any of Claims 18 to 21, wherein said motor (68) and/or control (82) means are hydraulically operated.

23. Apparatus (10) for tilling vineyards and orchards, intended to be attached to an agricultural tractor (12) to be driven by this latter along a working direction substantially coinciding with the driving direction of the tractor (12), the apparatus comprising a support structure (14) and a hoeing device (20) mounted on the support structure (14, 26) and arranged to perform an inter-stock hoeing operation, the hoeing device (20) including a working head comprising a rotary disc (64) which carries a plurality of hoeing tools (66) and motor means (68) for driving the working disc (64) for rotation,
the apparatus being **characterized in that** the working head of the hoeing device (20) is slidable transversely to the working direction between a retracted position and an extended position.

24. Apparatus according to Claim 23, further comprising control means (82) for controlling the movement of the working head of the hoeing device (20) between the retracted position and the extended position and sensor means (84) operatively connected to the control means (82) to control the movement of the working head of the hoeing device (20) back into the retracted position in case of contact with the stock of a plant.

25. Apparatus according to Claim 23 or Claim 24, further comprising a support body (80) and a plurality of guiding rods (78) transversely slidable within the support body (80), the working head of the hoeing device (20) being secured to the transversely outer ends of the guiding rods (78) and the control means (82) being arranged to control the sliding movement of the guiding rods (78).

26. Apparatus according to any of Claims 23 to 25, wherein said motor (68) and/or control (82) means are hydraulically operated.
